# DEMANDE DE BREVET EUROPEEN

(11) **EP 4 678 515 A1**
(43) Date de publication de la demande: **14.01.2026**
(21) Numéro de dépôt: 25182099.9
(22) Date de dépôt: 11.06.2025
(51) Int. Cl.: B62D 25/20

(54) **DOUBLURE DE LONGERONNET POUR VÉHICULE AUTOMOBILE**

(30) Priorité: 12.07.2024 FR 2407665
(71) Demandeur: Stellantis Auto SAS, 78300 Poissy (FR)
(72) Inventeur: RIVIERRE, LAURENT, 75015 PARIS (FR); GUILBAUT, MARC, 94140 ALFORTVILLE (FR)
(74) Mandataire: BCIP

(57) **Abrégé**

L'invention concerne une doublure (1) de longeronnet pour véhicule automobile, la doublure (1) étant configurée pour être intégrée dans un longeronnet afin de doubler une face supérieure du longeronnet pour en renforcer sa rigidité. La doublure (1) comporte une face principale (11) qui est configurée pour s'étendre à l'aplomb de la face supérieure du longeronnet, et une première patte d'appui (12) configurée pour être apposée sur al face supérieure du longeronnet, la première patte d'appui (12) s'étendant depuis la face principale (11) au travers d'une ouverture (13) aménagée sur ladite face principale (11), à proximité d'un bord arrière (111) de la face principale (11). Selon l'invention, la première patte d'appui (12) est formée par un bout de la face principale (11) de la doublure (1) découpé et mis en forme pour former ladite première patte d'appui (12).

## Description

Le contexte technique de la présente invention est celui des éléments de châssis pour véhicules automobiles qui renforcent la sécurité passive de tels véhicules automobiles, et plus particulièrement en cas de choc arrière. Plus particulièrement, l'invention a trait à une doublure de longeronnet et à un arrangement de châssis pour véhicule automobile.

Dans l'état de la technique, on connait des véhicules automobiles équipés d'un châssis. Ce châssis comprend une armature de soubassement formée, a l'arrière du véhicule automobile, de longeronnets qui s'étendent majoritairement suivant un axe longitudinal d'élongation du véhicule automobile. De tels longeronnets sont situés de part et d'autre du châssis et permettent la fixation de traverses entre eux afin de former une armature de soubassement rigide. Les longeronnets s'étendent longitudinalement entre l'avant et l'arrière du châssis, et comprennent au moins des longeronnets arrière latéraux disposés aux cotés droit et gauche du châssis par rapport à l'axe longitudinal du véhicule automobile.

Complémentairement, les longeronnets permettent aussi de monter des interfaces de train roulant, et notamment le train arrière. De telles interfaces nécessitent de faire montre d'une grande rigidité - à la fois statique et dynamique - pour pouvoir faire face aux situations d'usage normal du véhicule automobile mais aussi en cas de chocs et d'accidents. A cette fin, il est connu de renforcer ces interfaces de montage de train roulant sur les longeronnets.

Cependant, un inconvénient connu à l'ajout de ces renforts complémentaires au niveau des interfaces de train roulant sur les longeronnets résident dans une complexification de l'armature de soubassement et une augmentation de masse et des coûts supérieurs pour la fabrication l'assemblage et l'entretien des véhicules automobiles équipés de telles armatures de soubassement.

On connait aussi le document FR3139786 qui décrit une extension de longeronnet arrière du véhicule automobile, l'extension de longeronnet formant une équerre liée au longeronnet arrière par l'intermédiaire de rabats d'appui qui collaborent avec le longeronnet arrière. Une telle extension de longeronnet est liée à l'extrémité arrière du longeronnet arrière afin de renforcer la liaison avec une traverse arrière.

La présente invention a pour objet de proposer une nouvelle doublure de longeronnet afin de répondre au moins en grande partie aux problèmes précédents et de conduire en outre à d'autres avantages.

Un autre but de l'invention est de proposer un renforcement de longeronnet au niveau d'une interface de montage de train roulant qui soit légère.

Un autre but de l'invention est de proposer un tel renforcement qui soit facile à monter sur le longeronnet et, plus généralement, qui soit économique.

Selon un premier aspect de l'invention, on atteint au moins l'un des objectifs précités avec une doublure de longeronnet pour véhicule automobile, la doublure étant configurée pour coiffer une face supérieure du longeronnet, la doublure comportant :
- une face principale qui est configurée pour s'étendre à l'aplomb du longeronnet ;
- une première patte d'appui sur un fond du longeronnet, la première patte d'appui s'étendant depuis la face principale au travers d'une ouverture aménagée sur ladite face principale, à proximité d'un bord arrière de la face principale relativement à un axe longitudinal ;
- une deuxième patte d'appui sur un fond du longeronnet, la deuxième patte d'appui s'étendant depuis un bord latéral de la face principale et à proximité d'un bord avant de ladite face principale.

Dans le contexte de la présente invention, un axe longitudinal, un axe latéral et un axe vertical sont définis relativement au véhicule automobile sur laquelle la doublure conforme au premier aspect de l'invention est destinée à être montée. Plus particulièrement, l'axe transversal s'entend comme une direction prise entre un côté latéral du véhicule automobile et un côté latéral opposé dudit véhicule automobile. En d'autres termes, l'axe transversal s'entend selon une direction qui s'étend depuis un côté passager du véhicule automobile vers un côté conducteur dudit véhicule automobile, ou réciproquement. Les adjectifs latéraux, intérieur et extérieur font référence à un tel axe transversal. En outre, l'axe longitudinal s'étend comme étant pris le long d'une direction qui s'étend d'avant en arrière ou d'arrière en avant du véhicule automobile. L'axe longitudinal est perpendiculaire à l'axe transversal. Les adjectifs frontaux, avant et arrière font référence à cet axe longitudinal. Enfin, l'axe vertical s'entend comme étant pris le long d'un axe qui s'étend depuis les roues du véhicule automobile et vers le pavillon de toit dudit véhicule automobile, ou inversement, l'axe vertical étant simultanément perpendiculaire à l'axe transversal et à l'axe longitudinal. Les adjectifs dessus et dessous, ou inférieur et supérieur font référence à cet axe vertical.

Complémentairement, on définit aussi un axe d'élongation propre dans le référentiel de la doublure, l'axe d'élongation propre étant défini par la direction principale d'élongation de la doublure, défini notamment par la direction d'élongation de la face principale, c'est-à-dire la plus grande dimension de ladite face principale. Dans le contexte de l'intégration de la doublure sur le longeronnet et/ou dans le véhicule automobile, l'axe d'élongation propre de la doublure est confondu ou sensiblement confondu avec l'axe longitudinal.

Dans le contexte de la présente invention, le longeronnet forme une portée prismatique qui s'étend relativement à l'axe longitudinal du véhicule automobile, au niveau de chaque bord latéral dudit véhicule automobile. Les longeronnets forment des éléments structurels du véhicule automobile auxquels sont rapportés d'autres pièces du véhicule automobile. Les longeronnets permettent ainsi de fournir la rigidité nécessaire au fonctionnement du véhicule automobile, durant des séquences de roulage, mais aussi en cas d'accident afin de transmettre les efforts résultant dudit choc en direction de dispositifs d'absorption ou vers des trains roulants du véhicule automobile par exemple. Les longeronnets sont généralement formés de profilés en acier conférant à la structure de caisse sa robustesse.

Dans le contexte de la présente invention, la doublure forme une pièce d'interface mécanique qui coiffe une partie supérieure ou une partie inférieure du longeronnet auquel elle est associée. La doublure est mise en appui sur le longeronnet, par l'intermédiaire de sa première patte d'appui et de sa deuxième patte d'appui. La doublure permet ainsi de renforcer la rigidité mécanique du longeronnet, notamment suivant l'axe transversal et/ou suivant l'axe longitudinal, à la fois d'un point de vue statique et pour des chargements dynamiques lors des phases de roulage du véhicule automobile. Complémentairement, la doublure selon l'invention autorise d'interfacer d'autres éléments mécaniques de l'arrangement de châssis, et notamment des interface de fixation d'un train roulant, avec le longeronnet. La doublure est formée d'une tôle mise en forme par exemple par emboutissage. La doublure est formée préférentiellement d'une feuille métallique de faible épaisseur, par exemple supérieure à 3 mm. La doublure est avantageusement formée d'acier ou d'un alliage comportant de l'acier.

Dans le contexte de la présente invention, la face principale de la doublure est une face d'élongation principale horizontale et suivant l'axe longitudinal. La face principale de la doublure est destinée à s'étendre de manière parallèle ou sensiblement parallèle au fond du longeronnet auquel elle est associée et sur lequel elle est mise en appui.

Dans le contexte de la présente invention, la première patte d'appui s'étend depuis la face principale. La première patte d'appui est solidaire de la face d'appui et destinée à collaborer avec le fond du longeronnet auquel la doublure est associée. La première patte d'appui s'étend depuis la face principale et en direction du fond du longeronnet. La première patte d'appui est formée d'une feuille métallique mise en forme, par exemple par emboutissage.

Dans le contexte de la présente invention, la deuxième patte d'appui s'étend depuis la face principale. La deuxième patte d'appui est solidaire de la face d'appui et destinée à collaborer avec le fond du longeronnet auquel la doublure est associée. La deuxième patte d'appui s'étend depuis la face principale et en direction du fond du longeronnet. La deuxième patte d'appui est formée d'une feuille métallique mise en forme, par exemple par emboutissage. La mise en œuvre de deux pattes d'appui entre la doublure et le longeronnet permet ainsi de positionner plus facilement la doublure sur le longeronnet lors de son assemblage, et elle autorise aussi une meilleur reprise des efforts - et donc une plus grande rigidité - lors des différentes sollicitations mécaniques du longeronnet.

Dans le contexte de la présente invention, l'ouverture est aménagée sur la face principale de la doublure. L'ouverture est délimitée par un contour fermé de forme quelconque.

Ainsi, la doublure conforme au premier aspect de l'invention résout le problème technique en ce qu'elle est simple de fabrication et de mise en œuvre sur le longeronnet. La doublure peut être fabriquée par des moyens de fabrication traditionnels et économiques, pouvant être mis en œuvre à grande échelle et pour de larges volumes de fabrication. Plus particulièrement, la doublure selon l'invention permet de réaliser un renforcement de l'interface de fixation du train roulant au niveau du longeronnet par l'intermédiaire de la première patte d'appui et/ou de la deuxième patte d'appui qui, issues depuis la face principale de la doublure, permettent de mieux positionner la doublure sur le longeronnet avant le ferrage de ces pièces entre elles.

La doublure conforme au premier aspect de l'invention comprend avantageusement au moins un des perfectionnements ci-dessous, les caractéristiques techniques formant ces perfectionnements pouvant être prises seules ou en combinaison :
- la doublure est configurée pour être associée à une partie d'extrémité du longeronnet, telle que par exemple une partie frontale ou une partie arrière du longeronnet. Plus particulièrement, la doublure est configurée pour collaborer avec le longeronnet au niveau ou à proximité d'une interface de fixation d'un train roulant
- par exemple un train arrière - du véhicule automobile sur ledit longeronnet. En effet, la doublure selon l'invention permet de renforcer le longeronnet et l'interface de fixation du train roulant. Dans le contexte de la présente invention, le longeronnet avec lequel la doublure est destinée à collaborer est préférentiellement du type d'un longeronnet arrière, situé à proximité du coffre du véhicule automobile ;
- la première patte d'appui s'étend depuis la face principale et au travers de l'ouverture, de sorte qu'une extrémité libre de la première patte d'appui est destinée à être mise en appui contre le fond du longeronnet. L'extrémité libre de la première patte d'appui forme une plateforme d'appui destinée à être apposée contre le fond du longeronnet. L'extrémité libre de la première patte d'appui est située à distance de la face principale de la doublure. Cette configuration avantageuse permet d'établir un jeu vertical non nul entre le fond du longeronnet et la face d'appui de la doublure. En particulier, la première patte d'appui comporte un premier rebord d'appui formant une extrémité libre de ladite première patte d'appui, le premier rebord d'appui étant destiné à être mis en appui contre le fond du longeronnet ;
- la première patte d'appui est issue de matière avec la face principale de la doublure. Dans le contexte de la présente invention, par "issu de matière", on comprend que la première patte d'appui et la face principale de la doublure sont issues d'un même procédé de fabrication et qu'elles ne peuvent être détachées l'une de l'autre sans que l'une et/ou l'autre ne soit entièrement ou partiellement détériorée ou détruite. La première patte d'appui est obtenue par poinçonnage et/ou emboutissage de la face principale de la doublure selon l'invention. Cette configuration avantageuse permet de ne pas augmenter la masse de la doublure par rapport à celles déjà connues, puisque la première patte d'appui est obtenue par « prélèvement » d'une partie de la face principale qui est mise en forme pour être pliée de sorte à former ladite patte d'appui ;
- la première patte d'appui est issue d'un découpage partiel de l'ouverture et d'un pliage de la partie de la face principale située au niveau de l'ouverture ainsi découpée. En d'autres termes, un bord supérieur de la première patte d'appui forme une partie du contour fermé délimitant l'ouverture. Cette configuration avantageuse permet d'intégrer la première patte d'appui dans la doublure. La première patte d'appui est située entre les deux bords latéraux de la doublure. Cette configuration astucieuse permet de faciliter l'intégration de la doublure sur le longeronnet sans augmenter la masse de la doublure et sans augmenter l'empattement de la doublure sur le longeronnet ;
- d'une manière générale, la première patte d'appui a une conformation générale en « L » ou en « S » depuis la face principale.
- la deuxième patte d'appui s'étend depuis la face principale de sorte qu'une extrémité libre de la deuxième patte d'appui est destinée à être mise en appui contre le fond du longeronnet. L'extrémité libre de la deuxième patte d'appui forme une plateforme d'appui destinée à être apposée contre le fond du longeronnet. L'extrémité libre de la deuxième patte d'appui est située à distance de la face principale de la doublure. Cette configuration avantageuse permet d'établir un jeu vertical non nul entre le fond du longeronnet et la face d'appui de la doublure. En particulier, la deuxième patte d'appui comporte un deuxième rebord d'appui formant une extrémité libre de ladite deuxième patte d'appui, le deuxième rebord d'appui étant destiné à être mis en appui contre le fond du longeronnet ;
- la deuxième patte d'appui est issue de matière avec la face principale de la doublure. Dans le contexte de la présente invention, par "issu de matière", on comprend que la deuxième patte d'appui et la face principale de la doublure sont issues d'un même procédé de fabrication et qu'elles ne peuvent être détachées l'une de l'autre sans que l'une et/ou l'autre ne soit entièrement ou partiellement détériorée ou détruite. La deuxième patte d'appui est obtenue par poinçonnage et/ou emboutissage de la face principale de la doublure selon l'invention. Cette configuration avantageuse permet de ne pas augmenter la masse de la doublure par rapport à celles déjà connues ;
- la deuxième patte d'appui a une conformation générale en « L » ou en « S » depuis la face principale.
- la doublure comporte des feuillure latérales qui s'étendent depuis la face principal et de part et d'autre de ladite face principale, relativement à un axe transversal, chaque feuillure latérale étant destinée à être mise en appui contre une face latérale du longeronnet. Cette configuration avantageuse permet de faciliter le montage et la fixation de la doublure sur le longeronnet. En effet, les feuillures latérales de la doublure permettent de localiser la doublure entre les faces latérales du longeronnet. Par suite, la collaboration entre les feuillures de la doublure et les faces latérales du longeronnet d'une part, et les pattes d'appui de la doublure et le fond du longeronnet d'autre part, permettent de faciliter la fixation de la doublure sur le longeronnet ;
- chaque feuillure latérale s'étend depuis un bord arrière et vers un bord avant de la doublure. Chaque feuillure latérale s'étend de manière sécante par rapport à la face principale de la doublure. Préférentiellement, chaque feuillure latérale s'étend de manière perpendiculaire ou sensiblement perpendiculaire par rapport à la face principale de la doublure.

Selon un deuxième aspect de l'invention, il est proposé un arrangement de châssis pour véhicule automobile, l'arrangement de châssis comportant :
- un longeronnet qui s'étend suivant un axe longitudinal, le longeronnet comportant un fond et deux faces latérales qui s'étendent en saillie depuis le fond et de part et d'autre dudit fond, suivant l'axe longitudinal ;
- une doublure conforme au premier aspect de l'invention ou selon l'un quelconque de ses perfectionnements, la doublure étant associée au longeronnet.

L'arrangement de châssis est ainsi plus simple à assembler du fait notamment des pattes d'appui de la doublure, comme évoqué précédemment. un tel longeronnet est ainsi renforcé et permet de mieux transmettre les effort dans l'arrangement de châssis selon l'invention en cas de choc arrière par exemple.

Le longeronnet est préférentiellement du type d'un longeronnet arrière. Un longeronnet arrière est situé le long d'un bord latéral du coffre arrière du véhicule automobile équipé d'un tel arrangement de châssis.

L'arrangement de châssis conforme au deuxième aspect de l'invention comprend avantageusement au moins un des perfectionnements ci-dessous, les caractéristiques techniques formant ces perfectionnements pouvant être prises seules ou en combinaison :
- la face principale de la doublure s'étend à l'aplomb du fond du longeronnet, la première patte d'appui et la deuxième patte d'appui de la doublure étant chacune en appui sur le fond dudit longeronnet, de sorte que la face d'appui est située à distance dudit fond ;
- chaque feuillure latérale de la doublure est en appui contre la face latérale correspondante du longeronnet. En d'autres termes, la doublure est logée entre les deux faces latérales du longeronnet ;
- chaque feuillure latérale est fixée solidairement à la face latérale du longeronnet à laquelle elle est associée, préférentiellement par soudage ;
- le premier rebord d'appui de la première patte d'appui est fixé solidairement au fond du longeronnet, préférentiellement par soudage. Avantageusement, le premier rebord d'appui de la première patte d'appui est fixé solidairement simultanément au fond du longeronnet et à un embout de traverse de train arrière de l'arrangement de châssis, préférentiellement par soudage en trois épaisseurs ;
- le deuxième rebord d'appui de la deuxième patte d'appui est fixé solidairement au fond du longeronnet, préférentiellement par soudage.

Selon un troisième aspect de l'invention, il est proposé un véhicule automobile comportant au moins un arrangement de châssis conforme au deuxième aspect de l'invention ou selon l'un quelconque de ses perfectionnements.

Des modes de réalisation variés de l'invention sont prévus, intégrant selon l'ensemble de leurs combinaisons possibles les différentes caractéristiques optionnelles exposées ici.

D'autres caractéristiques et avantages de l'invention apparaîtront encore au travers de la description qui suit d'une part, et de plusieurs exemples de réalisation donnés à titre indicatif et non limitatif en référence aux dessins schématiques annexés d'autre part, sur lesquels :
[Fig.1] illustre une vue tridimensionnelle d'un exemple de réalisation d'une doublure de longeronnet conforme au premier aspect de l'invention ;
[Fig.2] illustre une vue de détail de la doublure de longeronnet illustrée sur la FIGURE 1 ;
[Fig.3] illustre une vue tridimensionnelle d'un exemple de réalisation d'un arrangement de châssis conforme au deuxième aspect de l'invention ;
[Fig.4] illustre une première vue de détail de l'arrangement de châssis illustré sur la FIGURE 3 ;
[Fig.5] illustre une deuxième vue de détail de l'arrangement de châssis illustré sur la FIGURE 3.

Bien entendu, les caractéristiques, les variantes et les différentes formes de réalisation de l'invention peuvent être associées les unes avec les autres, selon diverses combinaisons, dans la mesure où elles ne sont pas incompatibles ou exclusives les unes des autres. On pourra notamment imaginer des variantes de l'invention ne comprenant qu'une sélection de caractéristiques décrites par la suite de manière isolées des autres caractéristiques décrites, si cette sélection de caractéristiques est suffisante pour conférer un avantage technique ou pour différencier l'invention par rapport à l'état de la technique antérieur.

En particulier toutes les variantes et tous les modes de réalisation décrits sont combinables entre eux si rien ne s'oppose à cette combinaison sur le plan technique.

Sur les figures, les éléments communs à plusieurs figures conservent la même référence.

Dans les FIGURES décrites ci-après, on définit un axe longitudinal X, un axe latéral et un axe vertical Z relativement au véhicule automobile sur laquelle la doublure 1 selon l'invention est destinée à être montée.

Plus particulièrement, l'axe transversal Y s'entend comme une direction prise entre un côté latéral du véhicule automobile et un côté latéral opposé dudit véhicule automobile. En d'autres termes, l'axe transversal Y s'entend selon une direction qui s'étend depuis un côté passager du véhicule automobile vers un côté conducteur dudit véhicule automobile, ou réciproquement. Les adjectifs latéraux, intérieur et extérieur font référence à un tel axe transversal Y.

En outre, l'axe longitudinal X s'étend comme étant pris le long d'une direction qui s'étend d'avant en arrière ou d'arrière en avant du véhicule automobile. L'axe longitudinal X est perpendiculaire à l'axe transversal Y. Les adjectifs frontaux, avant et arrière font référence à cet axe longitudinal X.

Enfin, l'axe vertical Z s'entend comme étant pris le long d'un axe qui s'étend depuis les roues du véhicule automobile et vers le pavillon de toit dudit véhicule automobile, ou inversement, l'axe vertical Z étant simultanément perpendiculaire à l'axe transversal Y et à l'axe longitudinal X. Les adjectifs dessus et dessous, ou inférieur et supérieur font référence à cet axe vertical Z.

Complémentairement, on définit aussi un axe d'élongation propre dans le référentiel de la doublure 1, l'axe d'élongation propre étant défini par la direction principale d'élongation de la doublure 1, défini notamment par la direction d'élongation de la face principale 11, c'est-à-dire la plus grande dimension de ladite face principale 11. Dans le contexte de l'intégration de la doublure 1 sur le longeronnet 2 et/ou dans le véhicule automobile, l'axe d'élongation propre de la doublure 1 est confondu ou sensiblement confondu avec l'axe longitudinal X.

L'invention adresse une doublure 1 de longeronnet 2 pour véhicule automobile, la doublure 1 étant configurée pour coiffer une face supérieure 20 du longeronnet 2, la doublure 1 comportant :
- une face principale 11 qui est configurée pour s'étendre à l'aplomb du longeronnet 2 ;
- une première patte d'appui 12 sur un fond du longeronnet 2, la première patte d'appui 12 s'étendant depuis la face principale 11 au travers d'une ouverture 13 aménagée sur ladite face principale 11, à proximité d'un bord arrière 111 de la face principale 11 relativement à un axe longitudinal X ;
- une deuxième patte d'appui 14 sur un fond du longeronnet 2, la deuxième patte d'appui 14 s'étendant depuis un bord latéral de la face principale 11 et à proximité d'un bord avant 112 de ladite face principale 11.

L'invention selon son premier aspect se distingue de l'art antérieur en ce que la doublure 1 de longeronnet 2 comporte la première patte d'appui 12 au niveau du bord arrière 111 de la face d'appui. La présence de cette première patte d'appui 12 permet de faciliter la mise en position de la doublure 1 dans le longeronnet 2, c'est-à-dire sur la face supérieure 20 et entre des faces latérales 21 dudit longeronnet 2, mais aussi elle permet de mieux transmettre des efforts longitudinaux - statiques ou dynamiques - au travers du longeronnet 2 en doublant sa rigidité.

Ainsi, la doublure 1 s'étend de manière intercalaire - dans un plan horizontal délimité par l'axe longitudinal X et l'axe transversal Y - dans le longeronnet 2 auquel elle est associée.

La première patte d'appui 12 de la doublure 1 s'étend depuis la face principale 11 et en direction de la face supérieure 20 du longeronnet 2 situé en dessous. La première patte d'appui 12 est formée d'une feuille métallique découpée depuis la face principale 11 de la doublure 1 et mise en forme, par exemple par emboutissage.

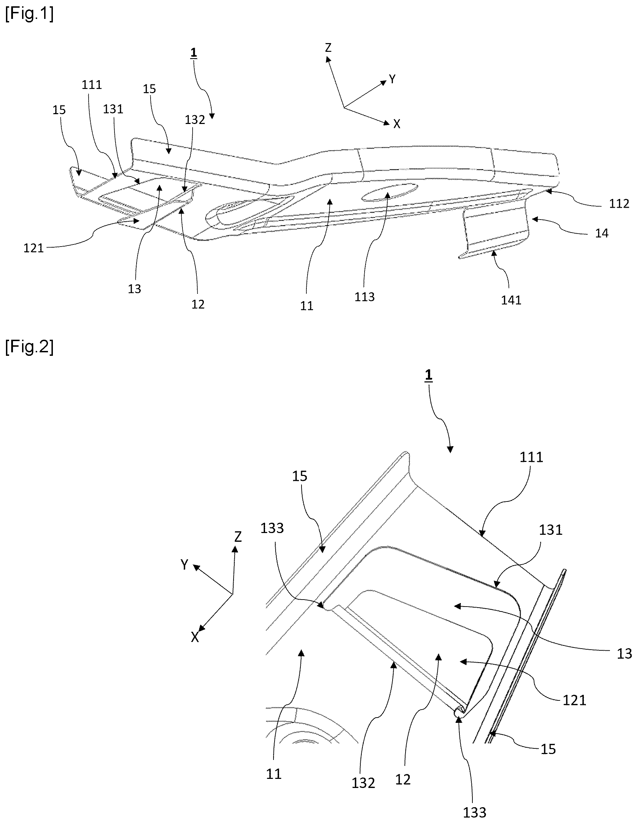

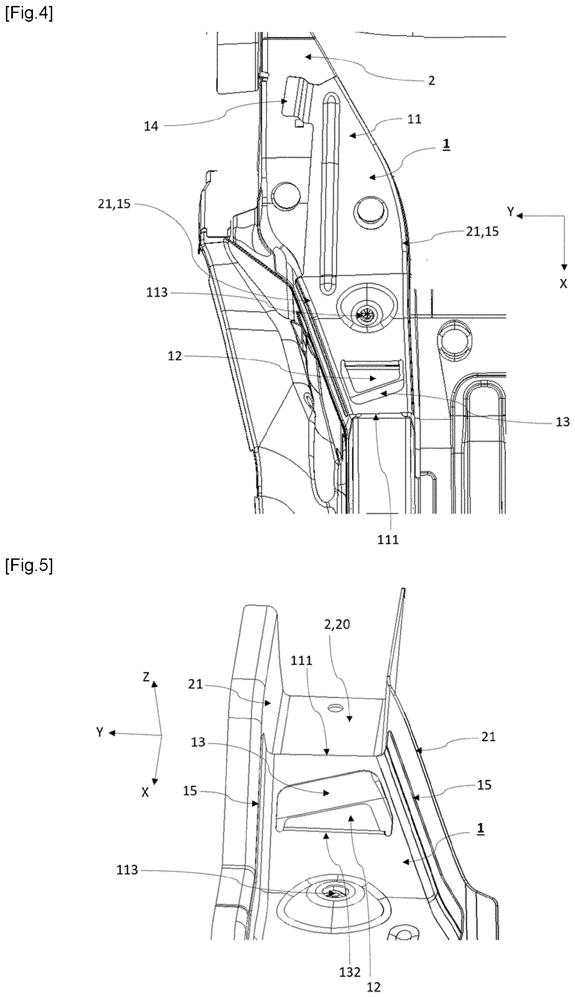

Ainsi, comme visible plus particulièrement sur les FIGURES 2 et 5, la première patte d'appui 12 s'étend depuis et au travers de l'ouverture 13 aménagée sur la face principale 11 de la doublure 1. L'ouverture 13 est découpée depuis la face principale 11 de la doublure 1 et selon un contour 131 fermé. Bien entendu, les dimensions du contour 131 fermé - et en particulier suivant l'axe longitudinal X - sont telles que, lorsque la première patte d'appui 12 est pliée depuis la face principale 11, alors elle peut accoster la face supérieure 20 du longeronnet 2 situé en dessous. En d'autres termes, une longueur de l'ouverture 13 prise entre un bord d'attache 132 de la première patte d'appui 12 et le bord opposé du contour 131 fermé suivant l'axe longitudinal X, est supérieure à une hauteur prise entre la face principale 11 de la doublure 1 et la face supérieure 20 du longeronnet 2.

Au niveau de son bord d'attache 132, le contour 131 de l'ouverture 13 forme un pli reliant la première patte d'appui 12 à la face principale 11 de la doublure 1. La première patte d'appui 12 a une forme en « S » ou en « L » afin de présenter un premier rebord d'appui 121 contre la face supérieure 20 du longeronnet 2. La première patte d'appui 12 est mise en forme par emboutissage par exemple.

Suivant l'axe transversal Y, le contour 131 de l'ouverture 13 est situé à distance d'un bord latéral de la première patte d'appui 12 afin de faciliter sa mise en forme. A cet effet, le contour 131 fermé de l'ouverture 13 définit des zones de retrait 133 situées de part et d'autre du bord d'attache 132 de la première patte d'appui 12, comme visible sur la FIGURE 2. Chaque zone de retrait 133 est située à une extrémité transversale du bord d'attache 132. Chaque zone de retrait 133 forme un congé depuis le bord d'attache 132 et vers le contour 131 fermé de l'ouverture 13. Cette configuration avantageuse permet de faciliter le pliage de la première patte d'appui 12.

La deuxième patte d'appui 14 de la doublure 1 s'étend depuis la face principale 11 et en direction de la face supérieure 20 du longeronnet 2 situé en dessous. La deuxième patte d'appui 14 est formée d'une feuille métallique issue de matière avec la face principale 11 de la doublure 1 et mise en forme, par exemple par emboutissage.

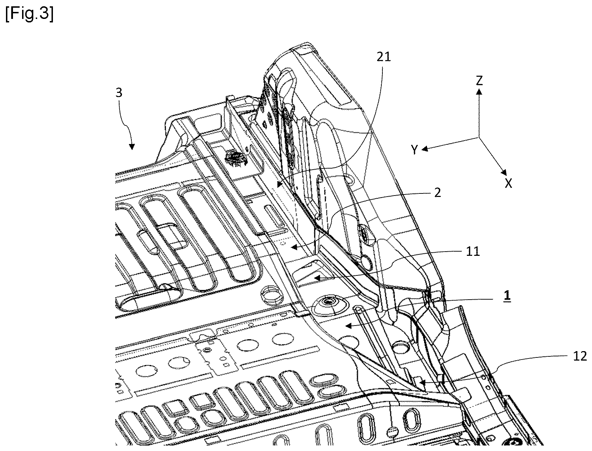

Ainsi, comme visible plus particulièrement sur les FIGURES 1 et 3, la deuxième patte d'appui 14 a une forme en « S » ou en « L » afin de présenter un deuxième rebord d'appui 141 contre la face supérieure 20 du longeronnet 2. La deuxième patte d'appui 14 est mise en forme par emboutissage par exemple.

La deuxième patte d'appui 14 est située au niveau d'un bord avant 112 de la face principale 11 de la doublure 1 afin d'améliorer la stabilité de la doublure 1 lors de son assemblage sur le longeronnet 2 - par soudage - et pour améliorer la transmission des efforts entre la doublure 1 et le longeronnet 2, renforçant ainsi la résistance du longeronnet 2 face à des chargements statiques ou à des efforts dynamiques exercés sur ledit longeronnet 2.

Comme visible sur les FIGURES, la doublure 1 comporte des feuillure latérale 15s qui s'étendent depuis la face principal et de part et d'autre de ladite face principale 11, relativement à l'axe transversal Y. Chaque feuillure collabore avec la face latérale 21 du longeronnet 2 située en regard afin d'être soudées ensembles. Cette configuration avantageuse permet de renforcer la rigidité - notamment suivant l'axe transversal Y - du longeronnet 2 équipé d'une telle doublure 1. Chaque feuillure latérale 15 s'étend depuis le bord arrière 111 et vers le bord avant 112 de la face principale 11 de la doublure 1. Chaque feuillure latérale 15 s'étend de manière perpendiculaire ou sensiblement perpendiculaire par rapport à la face principale 11 de la doublure 1.

La face principale 11 de la doublure 1 comporte une lumière 113 qui permet de faire passer au travers de la doublure 1 une interface de montage d'un train arrière sur le longeronnet 2.

Selon un deuxième aspect, l'invention adresse aussi un arrangement 3 de châssis pour véhicule automobile, l'arrangement 3 de châssis comportant :
- un longeronnet 2 qui s'étend suivant l'axe longitudinal X, le longeronnet 2 comportant un fond et deux faces latérales 21 qui s'étendent en saillie depuis la face supérieure 20 et de part et d'autre de ladite face supérieure 20, suivant l'axe longitudinal X. Le longeronnet 2 est préférentiellement du type d'un longeronnet 2 arrière équipant un véhicule automobile de part et d'autre d'un coffre arrière ;
- une doublure 1 telle que décrite précédemment et associée au longeronnet 2.

En synthèse, l'invention concerne une doublure 1 de longeronnet 2 pour véhicule automobile, la doublure 1 étant configurée pour être intégrée dans un longeronnet 2 afin de doubler une face supérieure 20 du longeronnet 2 pour en renforcer sa rigidité. La doublure 1 comporte une face principale 11 qui est configurée pour s'étendre à l'aplomb de la face supérieure 20 du longeronnet 2, et une première patte d'appui 12 configurée pour être apposée sur al face supérieure 20 du longeronnet 2, la première patte d'appui 12 s'étendant depuis la face principale 11 au travers d'une ouverture 13 aménagée sur ladite face principale 11, à proximité d'un bord arrière 111 de la face principale 11. Selon l'invention, la première patte d'appui 12 est formée par un bout de la face principale 11 de la doublure 1 découpé et mis en forme pour former ladite première patte d'appui 12.

Bien sûr, l'invention n'est pas limitée aux exemples qui viennent d'être décrits et de nombreux aménagements peuvent être apportés à ces exemples sans sortir du cadre de l'invention. Notamment, les différentes caractéristiques, formes, variantes et modes de réalisation de l'invention peuvent être associées les unes avec les autres selon diverses combinaisons dans la mesure où elles ne sont pas incompatibles ou exclusives les unes des autres. En particulier toutes les variantes et modes de réalisation décrits précédemment sont combinables entre eux.

## Revendications

1. Doublure (1) de longeronnet (2) pour véhicule automobile, la doublure (1) étant configurée pour coiffer une face supérieure (20) du longeronnet (2), la doublure (1) comportant :
- une face principale (11) qui est configurée pour s'étendre à l'aplomb du longeronnet (2) ;
- une première patte d'appui (12) sur un fond du longeronnet (2), la première patte d'appui (12) s'étendant depuis la face principale (11) au travers d'une ouverture (13) aménagée sur ladite face principale (11), à proximité d'un bord arrière (111) de la face principale (11) relativement à un axe longitudinal (X) ;
- une deuxième patte d'appui (14) sur un fond du longeronnet (2), la deuxième patte d'appui (14) s'étendant depuis un bord latéral de la face principale (11) et à proximité d'un bord avant (112) de ladite face principale (11).

2. Doublure (1) selon la revendication précédente, dans laquelle la première patte d'appui (12) est issue de matière avec la face principale (11) de la doublure (1).

3. Doublure (1) selon l'une quelconque des revendications précédentes, dans laquelle la première patte d'appui (12) comporte un premier rebord d'appui (121) formant une extrémité libre de ladite première patte d'appui (12), le premier rebord d'appui (121) étant destiné à être mis en appui contre le fond du longeronnet (2).

4. Doublure (1) selon l'une quelconque des revendications précédentes, dans laquelle la deuxième patte d'appui (14) est issue de matière avec la face principale (11) de la doublure (1).

5. Doublure (1) selon l'une quelconque des revendications précédentes, dans laquelle la deuxième patte d'appui (14) comporte un deuxième rebord d'appui (141) formant une extrémité libre de ladite deuxième patte d'appui (14), le deuxième rebord d'appui (141) étant destiné à être mis en appui contre le fond du longeronnet (2).

6. Doublure (1) selon l'une quelconque des revendications précédentes, dans laquelle la doublure (1) comporte des feuillure latérale (15)s qui s'étendent depuis la face principal et de part et d'autre de ladite face principale (11), relativement à un axe transversal (Y), chaque feuillure latérale (15) étant destinée à être mise en appui contre une face latérale (21) du longeronnet (2).

7. Arrangement (3) de châssis pour véhicule automobile, l'arrangement (3) de châssis comportant :
- un longeronnet (2) qui s'étend suivant un axe longitudinal (X), le longeronnet (2) comportant un fond et deux faces latérales (21) qui s'étendent en saillie depuis le fond et de part et d'autre dudit fond, suivant l'axe longitudinal (X) ;
- une doublure (1) selon l'une quelconque des revendications précédentes, la
doublure (1) étant associée au longeronnet (2).

8. Arrangement (3) de châssis selon la revendication précédente, dans lequel la face principale (11) de la doublure (1) s'étend à l'aplomb du fond du longeronnet (2), la première patte d'appui (12) et la deuxième patte d'appui (14) de la doublure (1) étant chacune en appui sur le fond dudit longeronnet (2), de sorte que la face d'appui est située à distance dudit fond.

9. Arrangement (3) de châssis selon l'une quelconque des revendications 7 ou 8, dans lequel chaque feuillure latérale (15) est fixée solidairement à la face latérale (21) du longeronnet (2) à laquelle elle est associée, préférentiellement par soudage.

10. Véhicule automobile comportant au moins un arrangement (3) de châssis selon l'une quelconque des revendications 7 à 9.
